# EUROPEAN PATENT APPLICATION

(11) **EP 3 570 007 A1**
(43) Date of publication of application: **20.11.2019**
(21) Application number: 19173250.2
(22) Date of filing: 08.05.2019
(51) Int. Cl.: G01N 17/02, G01N 17/04, G01N 27/30, G01N 27/12

(54) **HUMIDITY SENSOR AND CORROSION TEST METHOD USING THE SAME**

(30) Priority: 16.05.2018 JP 2018094898
(71) Applicant: Mazda Motor Corporation, Aki-gun Hiroshima 730-8670 (JP)
(72) Inventor: Asada, Teruaki, Hiroshima, 730-8670 (JP); Nakamoto, Katsunori, Hiroshima, 730-8670 (JP); Shigenaga, Tsutomu, Hiroshima, 730-8670 (JP)
(74) Representative: Herrmann, Uwe

(57) **Abstract**

Disclosed is a humidity sensor for evaluating the degree of corrosiveness of an environment under a coating. The humidity sensor includes a sensor body including a first conductive material and a second conductive material which are alternately stacked with an insulating material interposed therebetween. The sensor body has an outcrop in which layers of the first and second conductive materials are alternately exposed with a layer of the insulating material interposed therebetween, the outcrop serving as a sensor surface. A voltage is applied between the first and second conductive materials, so that humidity is detected based on a current which flows when a short circuit is caused between the first and second conductive materials by humidity on the sensor surface.

## Description

### BACKGROUND

The present disclosure relates to a humidity sensor and a corrosion test method using the same.

An atmospheric corrosion monitoring (ACM) sensor has been known as a sensor used for a corrosion test. This sensor is made of insulating paste which is screen-printed on a target metal (e.g., a Fe plate, or a galvanized steel plate) serving as a substrate, and conductive paste (e.g., Ag) printed on the insulating paste while keeping insulation from the substrate. When the sensor is exposed to the atmosphere, a thin water film is formed between the metal of the conductive paste and the substrate due to rainfall or dew condensation, and a corrosion current flows. This current is correlated with the rate of corrosion, and can be used to monitor the corrosiveness of the atmospheric environment.

Japanese Unexamined Patent Publication No. 2010-133748 describes another example of the corrosion test method. This method uses a corrosion sensor including a plurality of conductive portions provided on a surface of a substrate via a plurality of insulators. The substrate of the corrosion sensor is made of the same material as that of components of a structure exposed to the atmosphere, and has its surface covered with the same coating as that applied to the components. When the corrosion sensor is exposed to the atmosphere and a crack is caused on the coating due to the action of a corrosion factor, rainwater enters through the crack to cause a short circuit between the conductive portions and the substrate, and a corrosion current flows. When this current is measured with an ammeter, the degree of deterioration of the coating can be determined.

The ACM sensor is used to monitor the degree of corrosiveness of the environment around the target metal exposed to the atmosphere. Specifically, the sensor is used in an uncoated state. While corrosion proceeds under the coating, the environment under the coating and the environment outside the coating do not necessarily have the same degree of corrosiveness. That is, the ACM sensor cannot evaluate the degree of corrosiveness under the coating.

According to the corrosion test method disclosed in Japanese Unexamined Patent Publication No. 2010-133748, a corrosion current is detected with the surface of the sensor covered with a coating. However, no corrosion current flows unless a crack is caused in the coating and rainwater enters through the crack. Specifically, a product covered with a coating repeatedly experiences a phenomenon in which a corrosion factor penetrates the coating to reach the product surface under the coating or the corrosion factor under the coating goes outside the coating. The corrosion test method disclosed in Japanese Unexamined Patent Publication No. 2010-133748 cannot monitor such coming and going of the corrosion factor.

In addition, the surface of the sensor has irregularities due to the stacking of the conductive portions on the insulators, which makes it difficult to form the coating of a uniform thickness. Thus, it is not easy to evaluate the influence of the thickness of the coating on the corrosion resistance.

### SUMMARY OF THE INVENTION

In view of the foregoing, it is an object of the present disclosure to provide a sensor capable of detecting humidity with high sensitivity, and to evaluate the degree of corrosiveness of an environment under a coating with high reliability using the sensor as a corrosion sensor.

### SOLUTION TO THE PROBLEM

In order to achieve the object, conductive materials are alternately stacked with an electrical insulating material interposed therebetween, and an outcrop of the stack is used as a sensor surface to detect humidity and a corrosion factor.

The humidity sensor disclosed herein includes: a sensor body including a first conductive material and a second conductive material which are alternately stacked with an insulating material interposed therebetween; and lead wires respectively connected to the first and second conductive materials to connect the first and second conductive materials to a power supply and an ammeter, wherein the sensor body has an outcrop in which a layer of the first conductive material and a layer of the second conductive material are alternately exposed with a layer of the insulating material interposed therebetween, the outcrop serving as a sensor surface, and the power supply applies a voltage between the first and second conductive materials so that humidity is detected based on a current which flows when a short circuit is caused between the first and second conductive materials by humidity on the sensor surface.

Specifically, the outcrop of this humidity sensor in which the layers of the first conductive material, the second conductive material, and the insulating material are exposed is used as the sensor surface. In this case, since the humidity detection sensitivity corresponds to the interval between the first and second conductive materials (thickness of the insulating material), the detection can be achieved with high sensitivity (the sensitivity increases with the decrease in the interval between the first and second conductive materials). When the detection sensitivity decreases due to the deterioration of the sensor surface (e.g., oxidation of an exposed portion of the conductive materials), the sensor surface is polished so that the exposed edges of the first and second conductive materials are renewed. This can recover the detection sensitivity.

Examples of the first and second conductive materials include a metal material, an inorganic conductive material, and a conductive polymer material. The first and second conductive materials may be the same material or different materials. Preferred examples of the metal material include Fe, Al, Ag, Cu, Ni, and Pt. In terms of high durability, noble metals such as Ag and Pt are preferred.

Examples of the insulating material include a resin such as polyester, polyimide, polyethylene, and epoxy.

In one embodiment, the first and second conductive materials are wound in a spiral fashion with the insulating material interposed therebetween to form the sensor body. Winding the conductive materials in this way makes it possible to obtain a stack in which the first and second conductive materials are alternately stacked with the insulating material interposed therebetween.

The sensor body is not limited to the wound body, and may be a simply stacked body in which a plurality of films of the first conductive material and a plurality of films of the second conductive material are alternately stacked with the insulating material interposed therebetween. Alternatively, the sensor body may include a film of the insulating material folded in a zigzag shape, and the plurality of films of the first conductive material and the plurality of films of the second conductive material may be alternately inserted between the folds of the insulating material film.

In the wound sensor body, unlike the simply stacked body or the folded body, each of the first and second conductive materials is continuous. Thus, each lead wire is just connected to the first or second conductive material at a single point, so that the configuration is simplified. Further, in the wound sensor body, there is no need to provide a bend, which is insufficient in strength, for any of the first conductive material, the second conductive material, and the insulating material. Thus, both of the conductive materials and the insulating material can be made thin, which can advantageously improve the detection sensitivity.

In one embodiment, the sensor surface has irregularities of less than 1 µm. Thus, when the humidity sensor with a coating formed on the sensor surface is used as a corrosion sensor, a uniform coating can be formed on the sensor surface of the humidity sensor with high accuracy and less limitations on the kinds of the coating material. This is advantageous in obtaining a highly reliable result of a corrosion test.

In one embodiment, the insulating material has a thickness of not less than 1 µm and not more than 100 µm. Setting the thickness not more than 100 µm makes it possible to achieve high detection sensitivity, and is advantageous in view of ease of the winding of the components of the sensor body. Further, since the thickness is not less than 1 µm, the wound sensor body, the simply stacked sensor body, or the folded sensor body can be easily obtained without impairing the electrical insulating property. In a preferred embodiment, the thickness of the insulating material is not less than 10 µm and not more than 80 µm. In a more preferred embodiment, the thickness is not less than 20 µm and not more than 50 µm.

In one embodiment, each of the first and second conductive materials has a thickness of not less than 1 µm and not more than 100 µm. Setting the thickness not more than 100 µm makes it possible to achieve high detection sensitivity, and is advantageous in view of ease of the winding of the components of the sensor body. Further, since the thickness is not less than 1 µm, the wound sensor body, the simply stacked sensor body, or the folded sensor body can be easily obtained. In a preferred embodiment, the thickness of each of the conductive materials is not less than 10 µm and not more than 80 µm. In a more preferred embodiment, the thickness is not less than 20 µm and not more than 50 µm.

Specifically, in a preferred embodiment, the first and second conductive materials are alternately arranged at a pitch of not more than 200 µm, and the interval between the first and second conductive materials is not more than 100 µm. In a more preferred embodiment, the pitch is not less than 20 µm and not more than 160 µm, and the interval is not less than 10 µm and not more than 80 µm. In an even more preferred embodiment, the pitch is not less than 40 µm and not more than 100 µm, and the interval is not less than 20 µm and not more than 50 µm.

In one embodiment, an embedding resin layer is provided on a peripheral surface of the sensor body. This can reliably maintain the conductive materials and the insulating material in the stacked state, and can advantageously stabilize the quality. Examples of the embedding resin include an epoxy resin, a methacrylic acid resin, and a polyester resin.

A corrosion resistance test method disclosed herein uses the above-described humidity sensor as a corrosion sensor. The method includes: forming a coating on the sensor surface of the humidity sensor; connecting the lead wires of the humidity sensor to a power supply and an ammeter; and measuring, in a corrosive environment, a current generated as a result of a short circuit caused between the first and second conductive materials exposed on the sensor surface by a corrosion factor that has penetrated the coating.

The current flows as a result of a short circuit caused between the first and second conductive materials by a corrosion factor such as water that has penetrated the coating and reached the sensor surface. Therefore, whether the current is detected or not and the change in the current value with time can be used as evaluation indices of the degree of corrosiveness of the environment under the coating.

The layer of the first conductive material and the layer of the second conductive material are alternately exposed on the sensor surface with the layer of the insulating material interposed therebetween. This makes it possible to detect the coming and going of the corrosion factor with high sensitivity. This can advantageously improve the reliability of the evaluation of the degree of the corrosiveness of the environment under the coating and the diagnosis of aged deterioration of the coating, and by extension, can advantageously contribute to the development of a new material of the coating based on the results of the evaluation and the diagnosis.

After use of the humidity sensor as a corrosion sensor, the coating on the sensor surface is removed by polishing so that the exposed edges of the first and second conductive materials are renewed. Thus, the humidity sensor can be reused as the corrosion sensor.

In a preferred embodiment, the sensor surface has irregularities of less than 1 µm. This makes it possible to form a uniform coating by, for example, painting, on the sensor surface with high accuracy and less limitations on the kinds of the coating material. This is advantageous in obtaining a highly reliable result of a corrosion test on, e.g., the influence of the coating thickness on the corrosion resistance.

In one embodiment, the voltage applied between the first and second conductive materials is not less than 0.1 V and not more than 20 V. Setting the applied voltage too low is disadvantageous for detecting the current generated by the short circuit. On the other hand, setting the applied voltage high brings about electrolysis of water that has reached under the coating or dielectric breakdown of the coating, which may lead to detection failure of the current generated by the short circuit. In a preferred embodiment, the applied voltage is not less than 0.5 V and not more than 10 V. In a more preferred embodiment, the applied voltage is not less than 1 V and not more than 3 V.

In one embodiment, the coating is identical to a coating applied to parts of an automobile.

In one embodiment, the humidity sensor is arranged on some of the parts of the automobile and covered with a coating covering the some of the parts, and data of the current that changes with time due to an environmental change accompanying travel of the automobile is acquired.

This makes it possible to evaluate the time-varying change of the degree of the corrosiveness of the environment under the coating on each part of the automobile accompanying the use of the automobile, which is advantageous for the design of an antirust structure and the design of the coating.

### BRIEF DESCRIPTION OF THE DRAWINGS

FIG. 1 is a perspective view of a humidity sensor.
FIG. 2 is an enlarged view of a major part of the humidity sensor.
FIG. 3 illustrates a method of manufacturing a sensor body of the humidity sensor.
FIG. 4 is a graph showing a change with time of a current detected by a sensor of an example and a sensor of a comparative example when salt water is dropped.
FIG. 5 is a perspective view of a humidity sensor having a sensor surface covered with a coating, the coating partially cut out.
FIG. 6 illustrates an example of a corrosion test for an automobile.
FIG. 7 is a perspective view illustrating another example of the humidity sensor.
FIG. 8 is a perspective view showing still another example of the humidity sensor.

### DESCRIPTION OF EMBODIMENTS

Embodiments of the present disclosure will be described with reference to the drawings. The following description of preferred embodiments is only an example in nature, and is not intended to limit the scope, applications or use of the present disclosure.

### <Humidity Sensor>

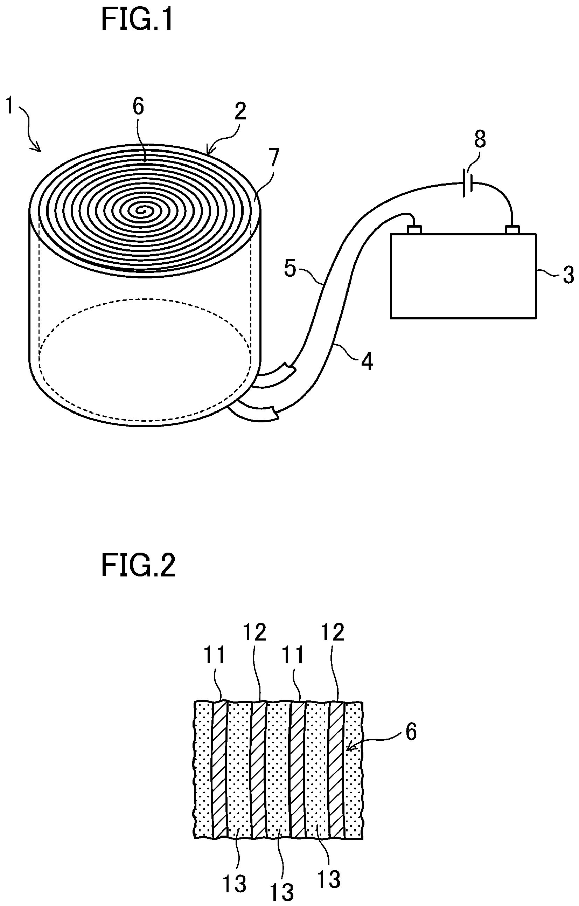

A humidity sensor 1 shown in FIG. 1 includes a sensor body 2, from which lead wires 4 and 5 extend to connect the sensor body 2 to a power supply 8 and an ammeter 3. The sensor body 2 has a cylindrical shape, and one end surface thereof serves as a sensor surface 6. A peripheral surface of the sensor body 2 orthogonal to the sensor surface 6, and the other end surface of the sensor body 2 are covered with an embedding resin layer 7.

As can be seen from the sensor surface 6 shown in FIG. 2, the sensor body 2 of this embodiment includes metal foil of the same kind, namely, iron foil 11, 12, as a first conductive material and a second conductive material. First iron foil 11 as a first conductive material and second iron foil 12 as a second conductive material are wound in a spiral fashion with an insulating layer (resin) 13 interposed therebetween. Winding these materials in this manner forms the sensor body 2 in which the first iron foil 11 and the second iron foil 12 are alternately stacked with the insulating layer interposed therebetween. An outcrop of the sensor body 2 in which layers (edges) of the first iron foil 11, the second iron foil 12, and the insulating layer 13 are exposed serves as the sensor surface 6.

In FIG. 2, the hatching is merely added to distinguish the iron foil 11 and the iron foil 12 from the insulating layer 13, and does not represent their cross sections.

One lead wire 4 is connected to the first iron foil 11, and the other lead wire 5 is connected to the second iron foil 12.

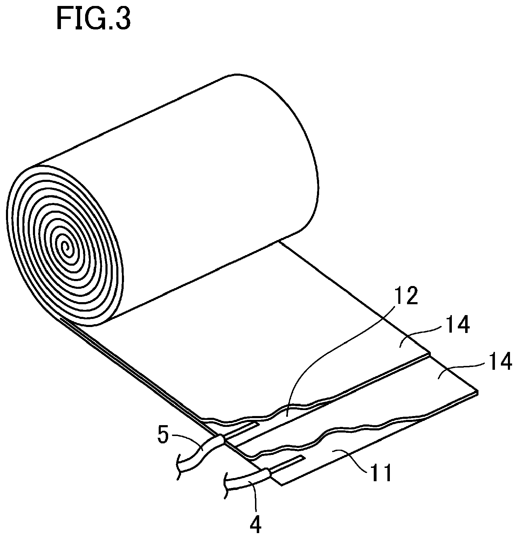

As shown in FIG. 3, an insulating material 14, the second iron foil 12, and another insulating material 14 are stacked on the first iron foil 11 in this order, and they are wound in a spiral fashion to form the sensor body 2. The insulating materials 14 each forming the insulating layer 13 can be applied to the surfaces of the first iron foil 11 and the second iron foil 12, respectively. Alternatively, instead of applying the insulating material, the insulating material in the shape of a thin film may be wound together with the first iron foil 11 and the second iron foil 12.

Each of the lead wires 4 and 5 may be connected to a longitudinal end portion, which will be wound first or last, of the corresponding one of the first iron foil 11 or the second iron foil 12. In the illustrated example, the lead wires 4 and 5 are respectively provided on the end portions to be wound last of the first iron foil 11 and the second iron foil 12. However, one of the lead wires may be provided on the end portion to be wound first of the corresponding foil, and the other lead wire may be provided on the end portion to be wound last of the corresponding foil.

After the first iron foil 11, the second iron foil 12, and the insulating materials 14 are wound in a spiral fashion and solidified with an embedding resin, the outcrop is polished so that the irregularities of the sensor surface 6 can be reduced to less than 1 µm.

In a preferred embodiment, each of the first iron foil 11, the second iron foil 12, and the insulating layer 13 has a thickness of not less than 1 µm and not more than 100 µm. In a more preferred embodiment, the thickness is not less than 10 µm and not more than 80 µm. In an even more preferred embodiment, the thickness is not less than 20 µm and not more than 50 µm.

### <Sensitivity Test of Humidity Sensor>

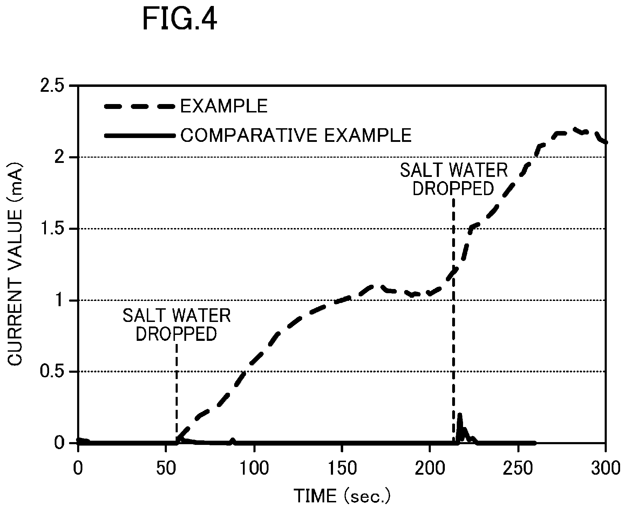

The lead wires 4 and 5 of the humidity sensor 1 were connected to the power supply 8 and the ammeter 3 (serial connection of the first iron foil 11, the second iron foil 12, the power supply 8, and the ammeter). With a voltage of 1.5 V applied between the first iron foil 11 and the second iron foil 12, salt water was intermittently dropped by 10 µL on the sensor surface 6 to see the change in a current value with time. Each of the first iron foil 11, the second iron foil 12, and the insulating layer 13 of the humidity sensor 1 of this example had a thickness of not more than 20 µm and not more than 50 µm. FIG. 4 shows the measurement results of this sensor together with those of a comparative example (a commercially available sensor). An ACM sensor manufactured by Syrinx. Inc. was used as the commercially available sensor of the comparative example.

Referring to FIG. 4, the comparative example (commercially available sensor) showed almost no rise of the current value, even when the salt water was dropped. In contrast, the humidity sensor 1 of the example showed a rise of the current value every time the salt water was dropped, indicating that the detection sensitivity is high. In the example, the current value gradually increased when the salt water was dropped. This is because a portion of the sensor surface 6 on which the salt water was dropped became wet, and then the wet area gradually spread toward its periphery (the range of a short circuit caused by the salt water between the first iron foil 11 and the second iron foil 12 was widened). The rise in the current value stopped thereafter, meaning that the spread of the wet area by the salt water stopped.

### <Corrosion Test Method>

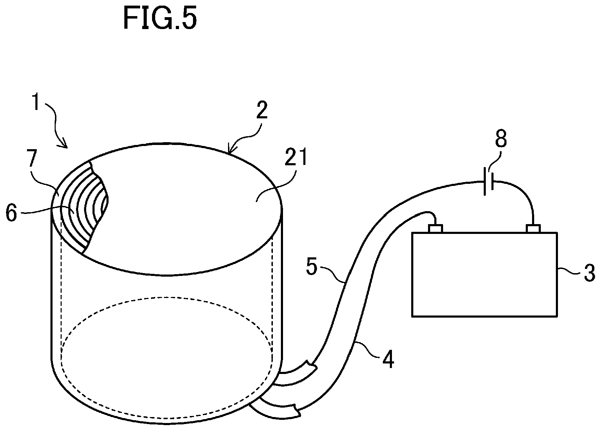

As shown in FIG. 5, a coating (an antirust coating for a metal product) 21 is formed on the sensor surface 6 of the humidity sensor 1. The lead wires 4 and 5 of the humidity sensor 1 are connected to the power supply 8 and the ammeter 3, and a voltage is applied between the first iron foil 11 and the second iron foil 12. In a corrosive environment, a current generated as a result of a short circuit caused between the first iron foil 11 and the second iron foil 12 exposed on the sensor surface 6 by a corrosion factor that has penetrated the coating 21 is measured. Since the current is generated by the corrosion factor such as water that has penetrated the coating 21 and reached the sensor surface 6, whether the current is detected or not and the change in the current value with time can be used as evaluation indices of the degree of corrosiveness of the environment under the coating 21.

### <Corrosion Test Methods for Automobile>

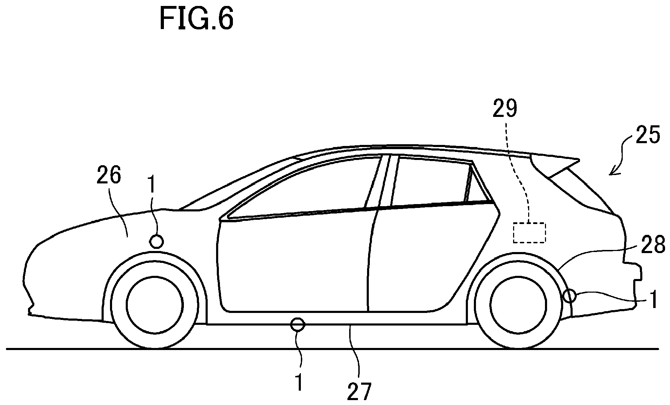

As shown in FIG. 6, the humidity sensors 1 are arranged on a plurality of parts of an automobile 25 (in the illustrated example, a fender 26, a floor bottom surface 27, and a rear wheel house 28), and connected to the power supply and a current measuring device 29. The sensor surface of each humidity sensor 1 is covered with the same coating as that applied to the corresponding part. Then, data of the current that changes with time due to an environmental change accompanying the travel of the automobile 25 and that is detected by each humidity sensor 1 is acquired.

This makes it possible to evaluate the time-varying changes in the degree of the corrosiveness of the environment under the coating on each part of the automobile accompanying the use of the automobile 25, which is advantageous for the design of an antirust structure and the design of the coating.

### <Other Embodiments of Humidity Sensor>

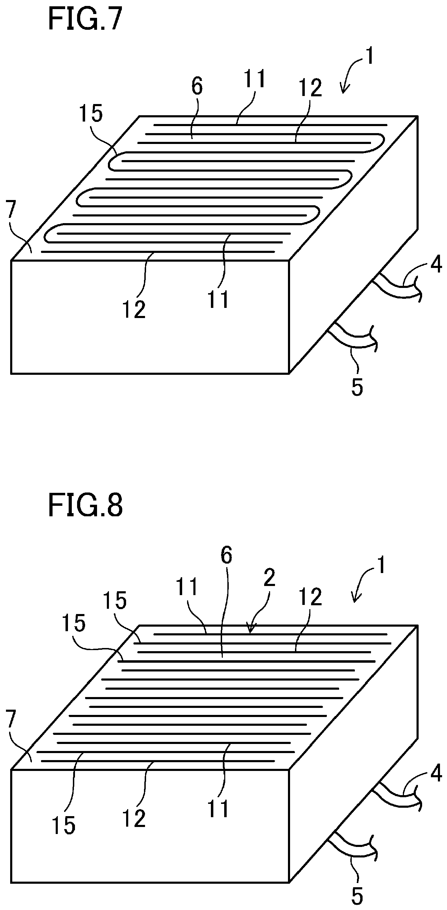

FIG. 7 shows a folded humidity sensor 1. In this humidity sensor 1, a sensor body 2 includes an insulating film (insulating material) 15 folded in a zigzag shape, and two or more sheets of first iron foil 11 and two or more sheets of second iron foil 12 alternately inserted between the folds from both sides thereof. Just like in the foregoing embodiment, an embedding resin layer 7 covers a surface opposite to the sensor surface 6, and a peripheral surface, of the sensor body 2.

The two or more sheets of first iron foil 11 forming the sensor body 2 are connected to a single lead wire 4, and the two or more sheets of second iron foil 12 forming the sensor body 2 are connected to a single lead wire 5.

FIG. 8 shows a simply stacked humidity sensor 1. In this humidity sensor 1, two or more sheets of first iron foil 11 and two or more sheets of second iron foil 12 are alternately stacked one by one with an insulating film (insulating material) 15 interposed therebetween to form a sensor body 2. Just like in the foregoing embodiment, an embedding resin layer 7 covers a surface opposite to the sensor surface 6, and a peripheral surface, of the sensor body 2.

The two or more sheets of first iron foil 11 forming the sensor body 2 are connected to a single lead wire 4, and the two or more sheets of second iron foil 12 forming the sensor body 2 are connected to a single lead wire 5.

In the humidity sensors 1 of the above-described embodiments, the irregularities of the sensor surface 6 are reduced so that the humidity sensor is used as a corrosion sensor with a coating formed on the sensor surface 6. However, if the humidity sensor is used to detect humidity without forming the coating, the sensor surface 6 may have some irregularities.

## Claims

1. A humidity sensor comprising:
a sensor body including a first conductive material and a second conductive material which are alternately stacked with an insulating material interposed therebetween; and
lead wires respectively connected to the first and second conductive materials to connect the first and second conductive materials to a power supply and an ammeter, wherein
the sensor body has an outcrop in which a layer of the first conductive material and a layer of the second conductive material are alternately exposed with a layer of the insulating material interposed therebetween, the outcrop serving as a sensor surface, and
the power supply applies a voltage between the first and second conductive materials so that humidity is detected based on a current which flows when a short circuit is caused between the first and second conductive materials by humidity on the sensor surface.

2. The humidity sensor of claim 1, wherein
the first and second conductive materials are wound in a spiral fashion with the insulating material interposed therebetween to form the sensor body.

3. The humidity sensor of claim 1 or 2, wherein
the sensor surface has irregularities of less than 1 µm.

4. The humidity sensor of any one of claims 1 to 3, wherein
the insulating material has a thickness of not less than 1 µm and not more than 100 µm.

5. The humidity sensor of claim 4, wherein
each of the first and second conductive materials has a thickness of not less than 1 µm and not more than 100 µm.

6. The humidity sensor of any one of claims 1 to 5, wherein
an embedding resin layer is provided on a peripheral surface of the sensor body.

7. A corrosion resistance test method using the humidity sensor of any one of claims 1 to 6 as a corrosion sensor, the method comprising:
forming a coating on the sensor surface of the humidity sensor;
connecting the lead wires of the humidity sensor to a power supply and an ammeter; and
measuring, in a corrosive environment, a current generated as a result of a short circuit caused between the first and second conductive materials exposed on the sensor surface by a corrosion factor that has penetrated coating.

8. The method of claim 7, wherein
the voltage applied between the first and second conductive materials is not less than 0.1 V and not more than 20 V.

9. The method of claim 7, wherein
the coating is identical to a coating applied to parts of an automobile.

10. The method of claim 9, wherein
the humidity sensor is arranged on some of the parts of the automobile and covered with a coating covering the some of the parts, and data of the current that changes with time due to an environmental change accompanying travel of the automobile is acquired.
